# EUROPEAN PATENT APPLICATION

(11) **EP 4 826 861 A1**
(43) Date of publication of application: **21.10.2026**
(21) Application number: 24888078.3
(22) Date of filing: 08.11.2024
(51) Int. Cl.: H01M 50/15, H01M 50/342, H01M 50/358, H01M 50/593, H01M 10/613, H01M 10/6552

(54) **TOP COVER ASSEMBLY, BATTERY CELL, BATTERY MODULE AND ENERGY STORAGE APPARATUS**

(30) Priority: 11.11.2023 CN 202323046949 U; 14.09.2024 CN 202422257798 U; 26.10.2024 CN 202422593268 U; 07.11.2024 CN 202422708734 U
(71) Applicant: D-Aus Energy Storage Technology (Xi'an) Co., Ltd, Xi' An, Shaanxi 710075 (CN)
(72) Inventor: CHEN, Mengqi, Xi'an, Shaanxi 710075 (CN); LEI, Zhengjun, Xi'an, Shaanxi 710075 (CN)
(74) Representative: Zacco GmbH
(86) International application number: PCT/CN2024/130776
(87) International publication number: WO 2025/098467

(57) **Abstract**

The present invention relates to the field of batteries, and specifically relates to a top cover assembly, a battery cell, a battery module, and an energy storage apparatus, which may prevent safety problems caused by thermal runaway. The top cover assembly comprises a top cover plate, an explosion venting port formed in the top cover plate, and an explosion venting branch tube. One end of the explosion venting branch tube is connected to the region of the top cover plate around the explosion venting port, and the other end thereof is used to connect to a first explosion venting converging tube. The battery cell comprises the top cover assembly, and the battery module and the energy storage apparatus each comprise the battery cell and the first explosion venting converging tube. When any constituent battery cell of the battery module experiences a thermal runaway, thermal runaway gas is discharged from the first explosion venting converging tube, to prevent the risk of thermal runaway gas posing a threat to the safety of people around the battery module and the energy storage apparatus.

## Description

### Technical Field

The present invention belongs to the field of batteries, and particularly relates to a top cover assembly, a battery cell, a battery module, and an energy storage device.

### Background

Currently, common battery modules (also referred to as battery packs) are formed by connecting a plurality of battery cells in series, in parallel, or in series and in parallel.

Each of the plurality of battery cells in a battery module may undergo thermal runaway due to mechanical, electrical, or thermal abuse, or due to inherent defects, etc. If effective measures are not taken once thermal runaway occurs, a safety incident may result, posing a threat to the safety of people around the battery module.

### Summary

Some embodiments of the present invention provide a top cover assembly, a battery cell, a battery module, and an energy storage device, so as to avoid safety problems caused by thermal runaway.

In an embodiment of the present invention, a top cover assembly is provided, including a top cover plate, an explosion venting port provided on the top cover plate, and two polarity terminals disposed on the top cover plate, and further including an explosion venting branch pipe;
where one end of the explosion venting branch pipe is connected to a region of the top cover plate around the explosion venting port.

Each of the two polarity terminals may be a post of the battery cell. If the height of the post of the battery cell does not meet a set requirement, a post adapter may be connected to the post of the battery cell, and the integrated structure formed by the post of the battery cell and the post adapter in coordination with each other may serve as each of the two polarity terminals of the battery cell.

In an embodiment of the present invention, the top cover assembly of an existing commercially available square lithium-ion battery is redesigned, which includes the top cover plate, two polarity terminals, the explosion venting port disposed on the top cover plate, and the explosion venting branch pipe disposed on the top cover plate at a position corresponding to the explosion venting port. The explosion venting branch pipe has one end connected to the region of the top cover plate around the explosion venting port and another end configured for connection with a first explosion venting manifold. When any of the battery cells constituting a battery module undergoes thermal runaway, a thermal runaway gas is discharged from the first explosion venting manifold, to prevent the risk of the thermal runaway gas posing a threat to the safety of people around the battery module.

Compared to a battery cell without an explosion venting branch pipe, this facilitates connection with the first explosion venting manifold while ensuring sealing at the position of connection, thereby preventing leakage of the thermal runaway gas from the connection portion of the battery cell and the first explosion venting manifold.

Moreover, in an embodiment of the present invention, when dimensional differences exist in the height direction among battery cells due to machining errors, if bottom cover plates of the battery cells are located in the same plane, it is inevitable that the top cover plates of the battery cells may not remain in the same plane. In the embodiment of present invention, the explosion venting portion of each of the plurality of battery cells communicates with the inner cavity of the first explosion venting manifold via the explosion venting branch pipes. The explosion venting branch pipes may compensate for height differences among the top cover plates in the height direction. Therefore, this embodiment has lower flatness requirements for the top cover plates, i.e., the explosion venting portions. When a certain height difference exists among the top cover plates of the battery cells, the explosion venting branch pipes may still ensure a sealed communication between the explosion venting portion of each of the plurality of battery cells and the inner cavity of the first explosion venting manifold.

In an embodiment, another end of the explosion venting branch pipe is configured for connection with a first explosion venting manifold; an explosion venting membrane is disposed on at least one of the explosion venting port and the explosion venting branch pipe; and the explosion venting branch pipe is insulated from a body of the top cover plate, or insulated from the first explosion venting manifold.

In the embodiment of the present invention, the explosion venting branch pipe is insulated from the body of the top cover plate or the first explosion venting manifold, avoiding safety problems caused by the first explosion venting manifold becoming electrified. Thus, the safety performance of such battery modules may be further improved.

In an embodiment, the explosion venting branch pipe and the top cover plate may be an integral part or separate parts. When they are the integral part, the explosion venting branch pipe is preferably insulated from the first explosion venting manifold. For example, a hollow connecting member may be added. The hollow connecting member is made of an insulating material, and one end of the hollow connecting member is fixedly sleeved and sealed with the explosion venting branch pipe, and another end of the hollow connecting member is configured for connection with the first explosion venting manifold. When they are separate parts, the explosion venting branch pipe is insulated from the top cover plate. In an embodiment, the explosion venting branch pipe is an injection-molded part and is formed on the top cover plate by injection molding.

In an embodiment of the present invention, the explosion venting branch pipe and the top cover plate may be fabricated as the integral part by using an integrated molding process. This facilitates fabrication while ensuring the reliability of connection between the explosion venting branch pipe and the top cover plate.

In an embodiment of the present invention, one end of the insulating hollow connecting member is sleeved over the explosion venting branch pipe (which is integrally formed with the top cover plate), and another end of the hollow connecting member is connected to the first explosion venting manifold, such that the explosion venting branch pipe is insulated from the first explosion venting manifold. Compared to a solution in which insulation is directly applied to the outlet end of the first explosion venting manifold, higher safety is achieved. Compared to a solution in which the explosion venting branch pipe is separated from the top cover plate and insulated from the top cover plate, the fabrication process is simpler.

In an embodiment of the present invention, the explosion venting branch pipe is an injection-molded part, which is formed on the top cover plate by injection molding. In this solution, the explosion venting branch pipe is insulated from the top cover plate, offering higher safety compared to solutions in which the explosion venting branch pipe is insulated from the first explosion venting manifold or in which insulation is directly applied to the outlet end of the first explosion venting manifold.

In an embodiment, to facilitate connection with the first explosion venting manifold having a branch pipe, the following improvements may be made to the top cover assembly and the explosion venting branch pipe:
Another end of the explosion venting branch pipe has a chamfer. When the explosion venting branch pipe has a relatively thin wall, a first annular plate concentric with the explosion venting branch pipe may be integrally formed on the outer side of the another end of the explosion venting branch pipe, and a chamfer is provided between the first annular plate and the another end of the explosion venting branch pipe. When the explosion venting branch pipe has a relatively thick wall, a chamfer may be directly formed on the another end of the explosion venting branch pipe without adding the first annular plate. In this solution, the branch pipe of the first explosion venting manifold needs to be inserted into the explosion venting branch pipe to achieve connection between them.

A chamfer is provided at the port of the explosion venting branch pipe connected to the first explosion venting manifold. When the first explosion venting manifold has branch pipes, adding the chamfer facilitates the insertion of each branch pipe into the explosion venting branch pipe, achieving connection between the explosion venting branch pipe and the first explosion venting manifold. To ensure the sealing performance of the connection portion, a sealing ring may be added at the connection portion.

In an embodiment, the explosion venting branch pipe includes a first hollow member and a second hollow member, where the first hollow member is a straight pipe section, while the second hollow member is a tapered pipe section; a large end of the tapered pipe section is connected to the straight pipe section, and the tapered pipe section near a small end is configured for connection with the first explosion venting manifold. When the first explosion venting manifold has branch pipes, this facilitates the insertion of the tapered pipe section into the corresponding branch pipe of the branch pipes to achieve connection between the explosion venting branch pipe and the first explosion venting manifold. When the first explosion venting manifold has no branch pipe, the tapered pipe section may be conveniently inserted into a corresponding opening in the first explosion venting manifold to achieve connection between the explosion venting branch pipe and the first explosion venting manifold. To ensure the sealing performance of the connection portion, a sealing ring may be added at the connection portion.

In an embodiment, a screw thread is provided on a outer wall of the explosion venting branch pipe. When the first explosion venting manifold has a threaded branch pipe, a nut connection method may be applied to achieve connection between the explosion venting branch pipe and the first explosion venting manifold.

In an embodiment, the explosion venting membrane is disposed at a port of the another end of the explosion venting branch pipe. The inner cavity of the explosion venting branch pipe may serve as a gas accommodating cavity, mitigating the bulging phenomenon of the housing of the battery cell caused by gas generation.

In an embodiment, each of the two polarity terminals is a post that is a columnar body including a first end face, a second end face, and a side wall; the first end face is configured for electrical connection with an electrode assembly; and a through groove configured to mount a heat exchange pipe is formed in the second end face, or a through groove or a through hole configured to mount a heat exchange pipe is formed in the side wall.

In an embodiment of the present invention, the through groove or the through hole configured to mount the heat exchange pipe is formed in the post. By mounting the heat exchange pipe in the through groove or the through hole, heat concentrated on the post may be transferred from the post to the heat exchange pipe and then carried away. Similarly, when the ambient temperature is too low for the battery cell to start normally, an external temperature control device may alternatively heat the battery cell via the heat exchange pipe.

In an embodiment, an opening size of the through groove is smaller than a maximum width of the through groove.

In an embodiment of the present invention, a through groove with an approximately U-shaped cross section is adopted. The opening size of the approximately U-shaped through groove is smaller than that of the maximum width of the through groove. During mounting of the heat exchange pipe, the heat exchange pipe is embedded into the through groove through slight deformation at the opening, causing the pipe wall of the heat exchange pipe to closely fit the bottom of the through groove, thereby improving heat exchange efficiency.

In an embodiment, the present invention may further provide a functional structure on each of the two polarity terminals, where the functional structure is configured to increase a heat exchange area of each of the two polarity terminals; and a portion of each of the two polarity terminals where the functional structure is provided is configured to be placed in an inner cavity of a heat exchange device for a battery module and to directly contact a heat exchange medium.

In an embodiment of the present invention, each of the two polarity terminals is provided with the functional structure that is configured to increase the heat exchange area of each of the two polarity terminals; and the portion of each of the two polarity terminals where the functional structure is provided is located within the heat exchange device and in direct contact with the heat exchange medium. Compared to a polarity terminal with no functional structure, a larger heat exchange area is provided, thereby achieving a better heat exchange effect.

In an embodiment, in a top cover assembly in which each of the two polarity terminals is provided with the functional structure, the explosion venting branch pipe and the top cover plate may be an integral part or separate parts. When they are an integral part, the explosion venting branch pipe is insulated from the first explosion venting manifold. In an embodiment, a hollow connecting pipe may be added. The hollow connecting pipe is made of an insulating material, and has one end fixedly sleeved and sealed with the explosion venting branch pipe and another end configured for connection with the first explosion venting manifold. When they are separate parts, the explosion venting branch pipe is insulated from the top cover plate. In an embodiment, the explosion venting branch pipe is an injection-molded part and is formed on the top cover plate by injection molding.

In an embodiment, in a top cover assembly in which each of the two polarity terminals is provided with the functional structure, to facilitate connection with the first explosion venting manifold having a branch pipe, the following improvements may be made to the top cover assembly and the explosion venting branch pipe: the another end of the explosion venting branch pipe has a chamfer. When the explosion venting branch pipe has a relatively thin wall, a first annular plate concentric with the explosion venting branch pipe may be integrally formed on the outer side of the another end of the explosion venting branch pipe, and a chamfer is provided between the first annular plate and the another end of the explosion venting branch pipe. When the explosion venting branch pipe has a relatively thick wall, a chamfer may be directly formed on the another end of the explosion venting branch pipe without adding the first annular plate. In this solution, the branch pipe of the first explosion venting manifold needs to be inserted into the explosion venting branch pipe to achieve connection between them. In an embodiment, the explosion venting branch pipe includes a first hollow member and a second hollow member, where the first hollow member is a straight pipe section, while the second hollow member is a tapered pipe section; a large end of the tapered pipe section is connected to the straight pipe section, and a section near a small end of the tapered pipe section is configured for connection with the first explosion venting manifold. In this solution, the explosion venting branch pipe needs to be inserted into the branch pipe of the first explosion venting manifold to achieve connection between them.

In an embodiment, the functional structure refers to n annular grooves, n being an integer greater than or equal to 1; each of the n annular grooves extends along a circumferential direction of a side wall of each of the two polarity terminals, and the n annular grooves are arranged along a height direction of each of the two polarity terminals. Compared to other functional structures, the annular grooves are easier to machine, so that the cost of the two polarity terminals is lower.

In an embodiment, the functional structure may alternatively be a through hole formed in each of the two polarity terminals, which penetrates through each of the two polarity terminals along the x-direction. An inner wall of the through hole may be provided with a plurality of heat dissipation fins that are uniformly distributed along a circumferential direction of the through hole, with each of the plurality of heat dissipation fins extending along an axial direction of the through hole. By providing the heat dissipation fins within the through hole, the contact area between the heat exchange medium and each of the two polarity terminals may be further increased, thereby increasing the heat exchange area and further improving the heat exchange effect. In addition, the plurality of heat dissipation fins are uniformly distributed along the circumferential direction of the through hole, resulting in good temperature uniformity across various portions of each of the two polarity terminals. Each of the plurality of heat dissipation fins extends along the axial direction of the through hole, without affecting the flow of a heat transfer medium within the through hole.

In another embodiment of the present invention, a battery cell is provided, including a tubular body, a top cover assembly, a bottom cover assembly, and an electrode assembly, where the tubular body, the top cover assembly, and the bottom cover assembly define a housing of the battery cell, and the electrode assembly is located within the housing, and where the top cover assembly is the top cover assembly described above.

In yet another embodiment of the present invention, a battery module is provided, including a first explosion venting manifold and a plurality of battery cells described above;
where the first explosion venting manifold is located above the top cover assembly of each of the plurality of battery cells and communicates with an explosion venting branch pipe of each of the plurality of battery cells, so as to ensure that a thermal runaway gas from the battery cell is discharged through the first explosion venting manifold after breaking through an explosion venting membrane.

In still another embodiment of the present invention, an energy storage device is provided, including a pack case and a plurality of battery cells described above located within the pack case;
where the pack case is provided with a first explosion venting manifold that is located above the top cover assembly of each of the plurality of battery cells and communicates with an explosion venting branch pipe of each of the plurality of battery cells, so as to ensure that a thermal runaway gas from the battery cell is discharged through the first explosion venting manifold after breaking through an explosion venting membrane.

The embodiments of the present invention have the following beneficial effects:
The explosion venting branch pipe is disposed on the top cover plate of the battery cell at the position corresponding to the explosion venting portion. The explosion venting branch pipe has one end connected to the region of the top cover plate around the explosion venting portion, and another end configured for connection with the first explosion venting manifold in the battery module and to communicate with the inner cavity of the first explosion venting manifold.

When any of the battery cells constituting the battery module undergoes thermal runaway, the thermal runaway gas is discharged from the first explosion venting manifold, to prevent the risk of the thermal runaway gas posing a threat to the safety of people around the battery module.

Compared to a battery cell without an explosion venting branch pipe, this facilitates connection with the first explosion venting manifold while ensuring sealing at the position of connection, thereby preventing leakage of the thermal runaway gas from the connection portion of the battery cell and the first explosion venting manifold.

Moreover, in an embodiment of the present invention, when dimensional differences exist in the height direction among battery cells due to machining errors, if the bottom cover plates of the battery cells are located in the same plane, it is inevitable that the top cover plates of the battery cells may not remain in the same plane. In an embodiment of the present invention, the explosion venting portion of each of the battery cells communicates with the inner cavity of the first explosion venting manifold via the explosion venting branch pipe. The explosion venting branch pipe may compensate for height differences among the top cover plates in the height direction. Therefore, this embodiment has lower flatness requirements for the top cover plates, i.e., the explosion venting portions. When a certain height difference exists among the top cover plates of the battery cells, the explosion venting branch pipe may still ensure a sealed communication between the explosion venting portion of each of the battery cells and the inner cavity of the first explosion venting manifold.

### Brief Description of the Drawings

FIG. 1 is a schematic structural diagram of a top cover assembly in Embodiment 1;
FIG. 2 is a schematic structural diagram of a top cover assembly having a hollow connecting member in Embodiment 1;
FIG. 3 is a schematic structural diagram of a top cover assembly in Embodiment 2;
FIG. 4 is a schematic structural diagram of a top cover assembly in Embodiment 3;
FIG. 5 is another schematic structural diagram of a top cover assembly in Embodiment 3;
FIG. 6 is a schematic structural diagram of a top cover assembly in Embodiment 4;
FIG. 7 is a schematic structural diagram of a post in Embodiment 6;
FIG. 8 is another schematic structural diagram of a post in Embodiment 6;
FIG. 9 is a third schematic structural diagram of a post in Embodiment 6;
FIG. 10 is a fourth schematic structural diagram of a post in Embodiment 6;
FIG. 11 is a cross-sectional view of a battery cell in Embodiment 6;
FIG. 12 is a schematic structural diagram of a battery cell in Embodiment 7;
FIG. 13 is a schematic structural diagram of a top cover assembly in Embodiment 10;
FIG. 14 is a cross-sectional view of a top cover assembly in Embodiment 10;
FIG. 15 is a schematic structural diagram of another top cover assembly in Embodiment 10;
FIG. 16 is a schematic structural diagram of a top cover assembly in Embodiment 11;
FIG. 17 is a schematic structural diagram of a top cover assembly in Embodiment 12;
FIG. 18 is a schematic structural diagram of a top cover assembly in Embodiment 13;
FIG. 19 is a schematic structural diagram of another top cover assembly in Embodiment 13;
FIG. 20 is a schematic structural diagram of a battery cell in Embodiment 14;
FIG. 21 is a schematic structural diagram of another battery cell in Embodiment 14;
FIG. 22 is a schematic structural diagram of a battery module in Embodiment 15;
FIG. 23 is an exploded schematic structural diagram of a battery module in Embodiment 15;
FIG. 24 is a cross-sectional view of a battery module in Embodiment 15;
FIG. 25 is a schematic structural diagram of a heat exchange sleeve in Embodiment 15;
FIG. 26 is schematic structural diagram of another heat exchange sleeve in Embodiment 15;
FIG. 27 is a cross-sectional view of another heat exchange sleeve in Embodiment 15;
FIG. 28 is a first partial exploded schematic structural diagram of a battery module in Embodiment 15;
FIG. 29 is a second partial exploded schematic structural diagram of a battery module in Embodiment 15;
FIG. 30 is a partial exploded schematic structural diagram of a battery module in Embodiment 16;
FIG. 31 is a partial schematic structural diagram of a battery module in Embodiment 17;
FIG. 32 is a partial cross-sectional view of a battery module in Embodiment 17;
FIG. 33 is a schematic structural diagram of a heat exchange pipe member in Embodiment 17; and
FIG. 34 is a partial cross-sectional view of a heat exchange pipe member in Embodiment 17.

The reference numerals in the drawings are as follows:
1, top cover assembly; 2, top cover plate; 3, post; 31, first end face; 32, second end face; 33, side wall; 34, through groove; 35, insulating member; 36, through hole; 4, explosion venting membrane; 5, explosion venting branch pipe; 6, hollow connecting member; 7, second annular plate; 8, first annular plate; 9, straight pipe section; 10, tapered pipe section; 11, external screw thread; 12, tubular body; 13, bottom cover assembly; 14, electrode assembly;
21, top cover plate; 22, polarity terminal; 23, explosion venting portion; 24, explosion venting branch pipe; 25, insulating rubber sleeve; 26, hollow connecting pipe; 27, annular groove; 28, through hole; 29, heat dissipation fin; 210, second annular plate; 211, first annular plate; 212, tubular body; 221, housing; 222, battery unit; 223, heat exchange device; 224, first explosion venting manifold; 225, battery cell; 226, heat exchange sleeve; 227, electrical connection portion; 2311, hollow member; 2312, annular sealing plate; 2313, first through hole; 2314, liquid inlet pipe; 2315, liquid outlet pipe; 2316, connecting pipe section; 241, electrical connecting member; 251, second through hole; 252, separator plate; 253, insulating plate; 254, insulating sealant layer; 255, half pipe; 256, top cover plate; 261, heat exchange pipe member; 262, penetrating hole; 2621, bottom port; and 2622, top port.

### Detailed Description of the Embodiments

To make objects, features, and advantages described above of the present invention more apparent and understandable, a detailed description of specific implementations of the present invention is provided below with reference to the FIG.. It is apparent that the described embodiments are part of the embodiments of the present invention, rather than all of the embodiments. All other embodiments obtained by a person of ordinary skill in the art on the basis of the embodiments in the present invention, without creative work, shall fall within the scope of protection of the present invention.

The following description provides many specific details to facilitate a comprehensive understanding of the present invention. However, the present invention may be implemented in other ways not specifically described herein. A person skilled in the art may make similar modifications or extensions without departing from the scope of the present invention. Therefore, the present invention is not limited to the specific embodiments disclosed below.

In the description of the present invention, it is to be noted that the terms "top", "bottom", and the like refer to orientations or positional relationships on the basis of orientations or positional relationships shown in the drawings. These terms are used merely to simplify and facilitate the description of the present invention, and are not intended to indicate or imply that the referenced apparatuses or elements have a specific orientation or be constructed and operated in a specific orientation. Therefore, such terms may not be construed as limitations of the present invention. In addition, the terms "first", "second", and the like are used solely for descriptive purposes and are not to be construed as indicating or implying relative importance.

According to Embodiments 1 to 9, a top cover assembly of an existing commercially available square lithium-ion battery. The top cover assembly includes a top cover plate, two posts, an explosion venting port provided on the top cover plate, and an explosion venting branch pipe disposed on the top cover plate at a position corresponding to the explosion venting port. The explosion venting branch pipe has one end connected to a region of the top cover plate around the explosion venting port and another end configured for connection with a first explosion venting manifold, where an explosion venting membrane is disposed on at least one of the explosion venting port and the explosion venting branch pipe. When any of battery cells constituting a battery module undergoes thermal runaway, a thermal runaway gas is discharged from the first explosion venting manifold after breaking through the explosion venting membrane, thereby preventing safety accidents caused by the thermal runaway gas.

It is to be noted that:
1. After the explosion venting branch pipe is connected to the first explosion venting manifold, the sealing performance of the connection portion should be ensured.
2. To improve the safety performance of an energy storage device, in Embodiments 1 to 9, the explosion venting branch pipe is insulated from a body of the top cover plate or the first explosion venting manifold.
3. The explosion venting branch pipe is substantially of a thin-walled approximately tubular structure, which may be integrally formed with the top cover plate by integrated fabrication, or may be fixed to the top cover plate by riveting, welding, or injection molding. A horizontal cross section (a cross section along its radial direction) of the explosion venting branch pipe may be in the shape of a rectangular ring or a circular ring. To better match the shape of the explosion venting port, the horizontal cross section of the explosion venting branch pipe is typically in the shape of a circular ring.
4. The first explosion venting manifold is configured for communication with the explosion venting branch pipes of a plurality of battery cells. When thermal runaway occurs in any battery cell, the thermal runaway gas breaks through the explosion venting membrane and is discharged from the first explosion venting manifold.

A top cover assembly, a battery cell having the top cover assembly, and an energy storage device in Embodiments 1 to 9 are specifically described below in conjunction with the accompanying drawings.

### Embodiment 1

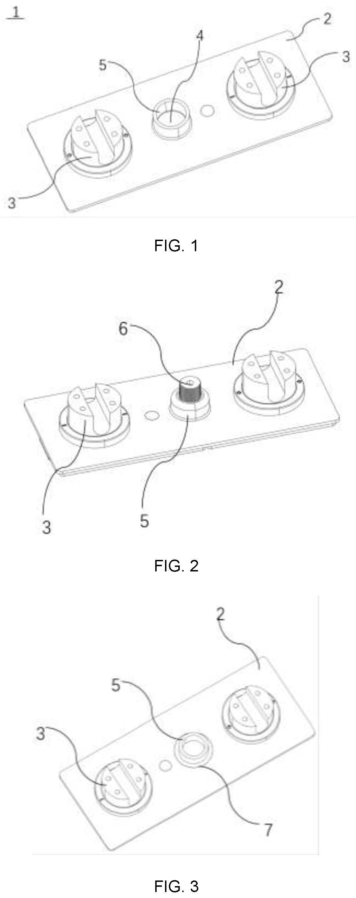

FIG. 1 is a schematic structural diagram of a top cover assembly 1 in this embodiment, which includes a top cover plate 2. Two posts 3 are disposed on the top cover plate 2, serving as positive and negative posts of a battery cell, respectively. An explosion venting port is provided on the top cover plate 2 between the positive and negative posts. An explosion venting membrane 4 is disposed on the explosion venting port along its radial direction. An explosion venting branch pipe 5 is fixed to a region of the top cover plate 2 around the explosion venting port. In this embodiment, the explosion venting branch pipe 5 is a straight pipe section and is integrally formed with the top cover plate 2 using a stamping process. The explosion venting branch pipe may be made of aluminum, the same as the top cover plate 2.

It should be noted that insulation is maintained between the positive and negative posts and the top cover plate 2. The method of maintaining insulation may be pouring an insulating glue or providing an insulating rubber sleeve, etc.

Since the explosion venting branch pipe 5 and the top cover plate 2 are an integral part in this embodiment, after the battery cell is formed, both the explosion venting branch pipe 5 and the top cover plate 2 are electrified. To improve safety performance, this embodiment uses a hollow connecting member 6 made of an insulating material to connect the explosion venting branch pipe 5 and the first explosion venting manifold. As shown in FIG. 2, one end of the hollow connecting member 6 may be sleeved inside the explosion venting branch pipe 5, while another end thereof extends out of the explosion venting branch pipe 5 for connection with the first explosion venting manifold. In an embodiment, one end of the hollow connecting member 6 may be sleeved outside the explosion venting branch pipe 5, while another end thereof extends out of the explosion venting branch pipe 5 for connection with the first explosion venting manifold. The hollow connecting member 6 may be made of a plastic material resistant to high temperatures (thermal runaway temperatures), such as PP or PE material. That is, a PP or PE pipe may be used as the hollow connecting member 6.

In some other embodiments, insulation between the explosion venting branch pipe 5 and the first explosion venting manifold may be achieved by applying an insulating coating on the inner and outer surfaces of the explosion venting branch pipe 5. However, compared to this embodiment, the process is more complex and the cost is higher.

### Embodiment 2

In this embodiment, the explosion venting branch pipe 5 and the top cover plate 2 are separate parts. Generally, the explosion venting branch pipe 5 may be fixed to the top cover plate 2 by welding, riveting, or injection molding.

If welding is used, typically, the material of the explosion venting branch pipe 5 is the same as that of the top cover plate 2. After the welding is completed, the insulation between the explosion venting branch pipe 5 and the top cover plate 2 as well as the first explosion venting manifold still needs to be considered. The method in Embodiment 1 may be adopted to insulate the explosion venting branch pipe 5 from the first explosion venting manifold. To improve welding convenience and firmness, as shown in FIG. 3, a second annular plate 7 concentric with the explosion venting branch pipe 5 may be provided on an outer side of an end of the explosion venting branch pipe 5 connected to the top cover plate 2. The explosion venting branch pipe 5 is welded to the top cover plate 2 via the second annular plate 7, where the second annular plate 7 and the explosion venting branch pipe 5 may be an integral part or separate parts.

Riveting is less convenient for assembly compared to welding. Moreover, after assembly is completed, the insulation between the explosion venting branch pipe 5 and the top cover plate 2 as well as the first explosion venting manifold still needs to be considered.

When injection molding is used, the material of the explosion venting branch pipe 5 is directly selected as an insulating material resistant to high temperatures (thermal runaway temperatures), such as a PP or PE material. The explosion venting branch pipe 5 is directly insulated from the top cover plate 2, eliminating the need for additional insulating members. The structure is simple, fabrication is convenient, and the cost is low. Therefore, in this embodiment, the explosion venting branch pipe 5 is fixed to the top cover plate 2 using injection molding.

In some other embodiments, the explosion venting branch pipe 5 made of materials such as PP or PE may alternatively be fixed to the top cover plate 2 by heat fusion. However, compared to this embodiment, the fabrication process is more cumbersome. However, compared to methods such as welding or riveting, no additional insulating members are required, and the structure is relatively simple.

### Embodiment 3

To facilitate the connection between the explosion venting branch pipe 5 and the first explosion venting manifold, the structure of the explosion venting branch pipe 5 of the straight pipe section is optimized in this embodiment.

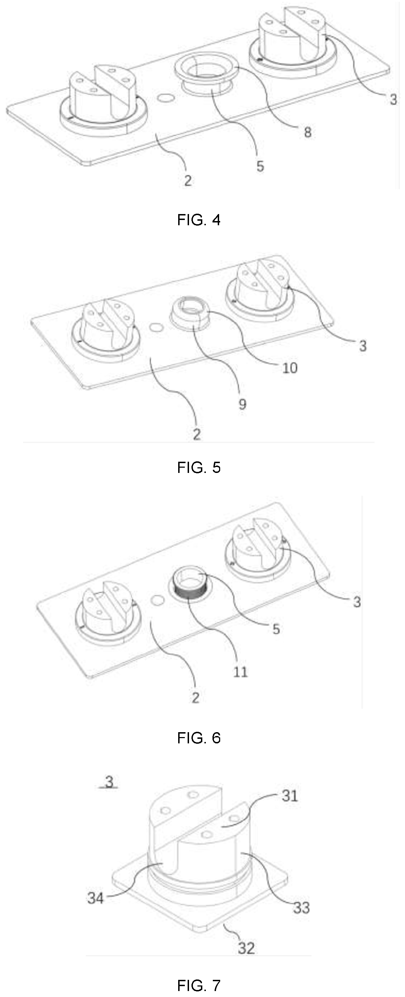

As shown in FIG. 4, in this embodiment, the end of the explosion venting branch pipe 5 connected to the first explosion venting manifold is outwardly folded, and a chamfer is formed at the folded portion. It can also be understood that a concentric first annular plate 8 is disposed on the outer side of the end of the explosion venting branch pipe 5 connected to the first explosion venting manifold, and a chamfer is provided between the first annular plate 8 and the explosion venting branch pipe 5. Of course, when the explosion venting branch pipe has a relatively thick wall, a chamfer may be directly machined at its end. When the first explosion venting manifold has branch pipes, adding a chamfer to the end of the explosion venting branch pipe 5 connected thereto may facilitate the insertion of each branch pipe into the explosion venting branch pipe 5, achieving the connection between the explosion venting branch pipe 5 and the first explosion venting manifold. To improve the sealing performance, a sealing ring or sealant, etc., may be added at the connection portion.

As shown in FIG. 5, in this embodiment, the explosion venting branch pipe 5 may alternatively be designed as a variable-diameter pipe section, where one section is a straight pipe section 9, and another section is a tapered pipe section 10. A large end of the tapered pipe section 10 is connected to the straight pipe section 9, and a small end of the tapered pipe section 10 is configured for connection with the first explosion venting manifold. When the first explosion venting manifold has branch pipes, the tapered pipe section 10 is inserted into the corresponding branch pipe to achieve connection between the explosion venting branch pipe 5 and the first explosion venting manifold. When the first explosion venting manifold has no branch pipe, the tapered pipe section 10 may alternatively be inserted into a corresponding through hole in the first explosion venting manifold to achieve connection between the explosion venting branch pipe 5 and the first explosion venting manifold.

In this embodiment, the explosion venting branch pipe 5 and the top cover plate 2 may be an integral part. After the battery cell is formed, both the explosion venting branch pipe 5 and the top cover plate 2 are electrified. To improve safety performance, an insulating first explosion venting manifold may be adopted and be connected to the explosion venting branch pipe.

In this embodiment, the explosion venting branch pipe 5 and the top cover plate 2 may alternatively be separate parts, and may be fabricated using the method in Embodiment 2.

### Embodiment 4

Different from the above embodiments, as shown in FIG. 6, in this embodiment, an external screw thread 11 is provided on an outer wall of the end of the explosion venting branch pipe 5 (straight pipe) connected to the first explosion venting manifold. The first explosion venting manifold matching this structure should have a branch pipe, and an outer wall of the branch pipe should also have a screw thread. The explosion venting branch pipe 5 is connected to the corresponding branch pipe of the first explosion venting manifold via the screw thread.

### Embodiment 5

Different from the above embodiments, in this embodiment, the explosion venting membrane 4 is disposed on the explosion venting branch pipe 5.

When no hollow connecting member 6 is provided within the explosion venting branch pipe 5, the explosion venting membrane 4 may be disposed at a port of the explosion venting branch pipe 5 away from the top cover plate 2. When the hollow connecting member 6 is provided within the explosion venting branch pipe 5, the explosion venting membrane 4 may be fixed to a port of the hollow connecting member 6 away from the top cover plate 2. After a gas is generated in an inner cavity of the battery cell, an inner cavity of the explosion venting branch pipe 5 may alternatively serve as a gas accommodating cavity, which may alleviate the bulging problem of the housing of the battery cell caused by gas generation.

To facilitate the fixation of the explosion venting membrane 4, an annular lug boss may be provided circumferentially on an inner wall of the explosion venting branch pipe 5 or an inner wall of the hollow connecting member 6. The explosion venting membrane 4 is fixed to the explosion venting branch pipe 5 via the annular lug boss.

### Embodiment 6

Different from the above embodiments, in this embodiment, the post 3 in the top cover assembly 1 is also optimized, and a specific structure is shown in FIG. 1 to FIG. 6.

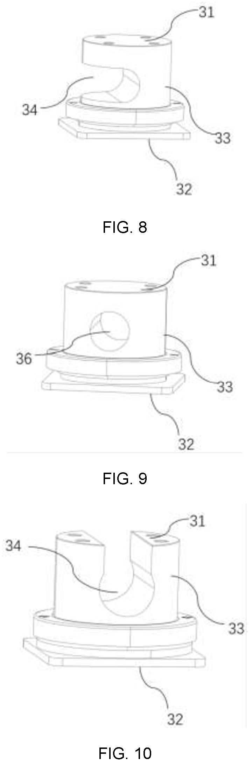

As shown in FIG. 7, FIG. 8, and FIG. 9, the post 3 in this embodiment is a columnar body, including a first end face 31, a second end face 32, and a side wall 33 (the first end face 31 and the second end face 32 are parallel to each other). At least one through groove 34 is provided on the first end face 31, or at least one through groove 34 or through hole 36 is provided on the side wall 33 to mount a heat exchange pipe. That is, an opening of the through groove 34 is located on the first end face 31 or the side wall 33, and an opening of the through hole 36 is located on the side wall 33. The first end face 31 is provided with an electrical connection region that is configured for connection with an external electrical connecting member. The second end face 32 is configured for electrical connection with an electrode assembly inside a battery housing. Compared to the structure shown in FIG. 7, in the structures shown in FIG. 8 and FIG. 9, the through groove 34 and the through hole 36 are formed in the side wall 33 (the opening of the through groove 34 is located on the side wall 33). Compared to forming the through groove 34 in the first end face 31, a contact area between the heat exchange pipe and the inner wall of the through groove 34 within the through groove 34 is larger, resulting in higher heat exchange efficiency. In addition, when the through groove 34 or each of the at least one through hole 36 is formed in the side wall 33, the entire region of the first end face 31 may be used as the electrical connection region. Two through grooves 34 or through holes 36 may alternatively be provided on the side wall 33 of the post 3 simultaneously to increase the number of heat exchange pipes placed, thereby further improving heat exchange efficiency. The structures shown in FIG. 7 and FIG. 8, compared to FIG. 9, make the heat exchange pipe easier to mount.

A cross section of the through groove 34 is C-shaped or U-shaped. For the through groove 34 with the C-shaped cross section, an opening width thereof is smaller than that of the maximum width of the through groove 34. Such a design is beneficial for the heat exchange pipe to be clamped within the through groove 34 via interference fit. The curvature formed at both ends of the C-shaped through groove 34 provides natural tension, which is beneficial for tightly clamping the heat exchange pipe within the through groove 34. For the through groove 34 with an approximately U-shaped cross section, as shown in FIG. 10, the cross section at the opening of the through groove 34 is rectangular, and near a groove bottom portion, the cross section is in a large semi-circular shape. A dimension at the opening is slightly smaller than that of the maximum width of the through groove 34 and also slightly smaller than an outer diameter of the heat exchange pipe. Such a design is also beneficial for the heat exchange pipe to be clamped within the through groove 34 via interference fit, and simultaneously beneficial for fixing the heat exchange pipe within the through groove 34. The interference fit portion is mainly in the groove bottom region where the cross section is in the large semi-circular shape.

A horizontal cross section of the post 3 may be circular, rectangular, or racetrack-shaped. Posts of different shapes are selected according to different battery models, and may alternatively be in other different shapes, which are not exhaustively listed in this embodiment.

In this embodiment, the second end face 32 of the post 3 is close to the electrode assembly. Therefore, the second end face 32 is closer to the electrode assembly inside a battery. The heat exchange pipe should be placed as close as possible to the second end face 32. Such a configuration enables the heat exchange pipe to be placed as close as possible to the interior of the battery for heat transfer.

By providing the through groove 34 or the through hole 36 on the post 3 and placing the heat exchange pipe within the through groove 34 or the through hole 36, a temperature of the post 3 may be effectively controlled. In an embodiment, by providing the electrical connection region on the first end face 31 of the post 3, an electrical connecting member may be mounted via the electrical connection region to achieve parallel connection of a plurality of square batteries. Such a structure is simple, highly practical, easy to operate, enables heat balance of the battery module, provides good heat dissipation effect, and has low cost.

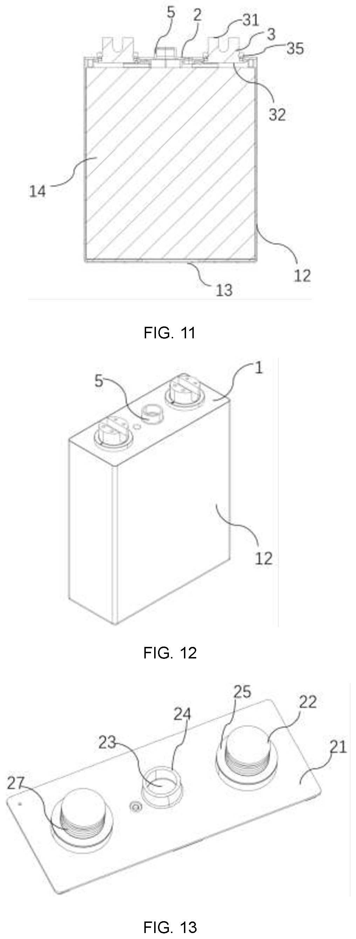

As can be seen in conjunction with FIG. 11, the post 3 is fixed to the top cover plate 2. To achieve insulation between the post 3 and the top cover plate 2, an insulating member 35 is further provided. The top cover plate 2 is provided with a through hole in which the post 3 is fixed, and the insulating member 35 is fixed between the through hole and the post 3.

### Embodiment 7

FIG. 11 and FIG. 12 are schematic structural diagrams of a battery cell in this embodiment, which includes a tubular body 12, a top cover assembly 1, a bottom cover assembly 13, and an electrode assembly 14, where the top cover assembly 1 is the top cover assembly 1 in the above embodiments. The top cover assembly 1 in Embodiment 3 is taken as an example in FIG. 11, and the top cover assembly 1 in Embodiment 1 is taken as an example in FIG. 12.

During fabrication of the battery cell, the electrode assembly 14 is placed into a barrel formed by the tubular body 12 and the bottom cover assembly 13, and then the top cover assembly 1 is fixed at an open end of the barrel.

### Embodiment 8

This embodiment provides a battery module, including a plurality of battery cells in Embodiment 7 and a first explosion venting manifold. An entire pipe section may be used as the first explosion venting manifold. The first explosion venting manifold is located above each of the plurality of battery cells. Through holes corresponding to the explosion venting branch pipes 5 of the plurality of battery cells may be formed in the first explosion venting manifold. The explosion venting branch pipes 5 are inserted into the through holes to achieve connection between the explosion venting branch pipes 5 and the first explosion venting manifold. In an embodiment, branch pipes may be added at the through holes of the first explosion venting manifold. The branch pipes are configured to communicate with the corresponding venting branch pipes 5. When the explosion venting branch pipe 5 and the top cover plate 2 are an integral part, after the battery cell is formed, both the explosion venting branch pipe 5 and the top cover plate 2 are electrified. To improve safety performance, an insulating first explosion venting manifold may be adopted and be connected to the explosion venting branch pipe.

Different connection methods are provided for different explosion venting branch pipes 5, which have been specifically described in the above embodiments and will not be repeated here.

### Embodiment 9

This embodiment provides an energy storage device, including a plurality of battery modules connected in series and a first explosion venting manifold. Each of the plurality of battery module is formed by connecting a plurality of battery cells in Embodiment 7 in parallel.

The first explosion venting manifold may be a part of a pack case. A top cover of the pack case is designed as a double-layer structure, i.e., the top cover of the pack case is made up of two cover plates. A gap exists between the two cover plates, serving as an explosion venting manifold channel. The two cover plates are sealed at their four sides, and smoke exhaust ports are provided at four sides of a top cover plate or the two cover plates. A through hole penetrating the explosion venting manifold channel is formed in a bottom cover plate at a position corresponding to the explosion venting branch pipe 5 of each of the plurality of battery cells. One end of the explosion venting branch pipe 5 of each of the plurality of battery cells is inserted into the corresponding through hole in the bottom cover plate in an interference fit manner. When thermal runaway occurs in any of the plurality of battery cells, a thermal runaway gas breaks through the explosion venting membrane 4, enters the explosion venting manifold channel through the explosion venting branch pipe 5, and is discharged from the smoke exhaust ports.

In some other embodiments, branch pipes may alternatively be added at the positions of the through holes on the bottom cover plate, and the branch pipes are connected to the explosion venting branch pipes 5 of the corresponding battery cells. Specific connection methods have been described in the above embodiments and will not be repeated here.

To solve safety hazards existing in battery modules due to heat generation and thermal runaway, Embodiments 10 to 17 provides a battery module with the following structure:
Such a battery module includes at least a heat exchange device, a first explosion venting manifold, and a plurality of battery cells arranged along the same direction.

The heat exchange device is configured to perform heat exchange for the battery module. The heat exchange here may be understood as heat dissipation of the battery module or heating of the battery module. When a temperature of the battery module is higher than a set threshold, a heat exchange medium at a lower temperature is introduced into the heat exchange device to cool the battery module. When the temperature of the battery module is lower than the set threshold, a heat exchange medium at a higher temperature is introduced into the heat exchange device to heat the battery module. By controlling the temperature of the heat exchange medium, it can be ensured that the battery module always operates at a normal operating temperature.

To optimize the heat exchange effect of the battery module, in Embodiments 10 to 17, the heat exchange device is disposed at the top of each of the plurality of battery cells. The heat exchange device mainly performs heat exchange on polarity terminals of the battery cells where heat is more concentrated. Moreover, a direct heat exchange manner is adopted. In the z-direction, each polarity terminal penetrates through the heat exchange device, and a portion of the structure of the polarity terminal is directly placed in an inner cavity of the heat exchange device. The polarity terminals directly contact the heat exchange medium, achieving heat exchange for the polarity terminals. Compared to an indirect heat exchange manner, this approach has a shorter heat exchange path. The heat exchange medium directly acts on the polarity terminals, thereby improving the utilization efficiency of the heat exchange medium and enhancing the heat exchange efficiency of the battery. An electrical connection portion of the polarity terminals needs to extend out of the heat exchange device and is configured for connection with an electrical connecting member. The electrical connecting member here is a device for achieving electrical connection of each of the plurality of battery cells. The electrical connection here may be series connection, parallel connection, or series-parallel connection.

The first explosion venting manifold extends along a direction in which the plurality of battery cells are arranged and covers the explosion venting portions of the plurality of battery cells, and an inner cavity of the first explosion venting manifold communicates with the explosion venting portion of each of the plurality of battery cells. At least one end of the first explosion venting manifold serves as a thermal runaway gas discharge port. The explosion venting portion of the battery cell may also be referred to as an explosion venting port, an explosion-proof portion, a pressure relief port, an explosion-proof port, or the like of the battery cell and is mainly configured to discharge the thermal runaway gas of the battery cell.

When any of the plurality of battery cells constituting the battery module undergoes thermal runaway, the thermal runaway gas is discharged from the first explosion venting portion after breaking through the explosion venting membrane, thereby preventing safety accidents caused by the diffusion of the thermal runaway gas.

To further improve the safety performance of the battery module described above, in Embodiments 10 to 17, existing battery cells are mainly improved in two aspects.

In a first aspect, the explosion venting branch pipe is disposed on the top cover plate of the battery cell at the position corresponding to the explosion venting portion. The explosion venting branch pipe has one end connected to the region of the top cover plate around the explosion venting portion, and another end configured for connection with the first explosion venting manifold in the battery module and to communicate with the inner cavity of the first explosion venting manifold.

Compared to a battery cell without an explosion venting branch pipe, this facilitates connection with the first explosion venting manifold while ensuring sealing at the position of connection, thereby preventing leakage of the thermal runaway gas from the connection portion of the battery cell and the first explosion venting manifold.

Moreover, in Embodiments 10 to 17, when dimensional differences exist in the height direction among battery cells due to machining errors, if the bottom cover plates of the battery cells are located in the same plane, it is inevitable that the top cover plates of the battery cells may not remain in the same plane. In Embodiments 10 to 17, the explosion venting portion of each of the battery cells communicates with the inner cavity of the first explosion venting manifold via the explosion venting branch pipe. The explosion venting branch pipe may compensate for height differences among the top cover plates in the height direction. Therefore, this embodiment has lower flatness requirements for the top cover plates, i.e., the explosion venting portions. When a certain height difference exists among the top cover plates of the battery cells, the explosion venting branch pipe may still ensure a sealed communication between the explosion venting portion of each of the battery cells and the inner cavity of the first explosion venting manifold.

In a second aspect, each of the two polarity terminals of the battery cell is provided with the functional structure that is configured to increase the heat exchange area of each of the two polarity terminals; and the portion of each of the two polarity terminals where the functional structure is provided is located within the heat exchange device and in direct contact with the heat exchange medium. Compared to a polarity terminal with no functional structure, a larger heat exchange area is provided, thereby achieving a better heat exchange effect.

It is to be noted that:
1. The explosion venting branch pipe is substantially of a thin-walled approximately tubular structure, which may be integrally formed with the top cover plate by integrated fabrication, or may be fixed to the top cover plate by riveting, welding, or injection molding.
2. In Embodiments 10 to 17, structures that may increase the heat exchange area of each of the two polarity terminals are collectively referred to as functional structures. Such functional structures may include annular grooves, through holes, dot-shaped pits, protrusions, etc., located on the side wall of each of the two polarity terminals.
3. Each of the two polarity terminals may be a post of the battery cell. If the height of the post of the battery cell does not meet a set requirement, a post adapter may be connected to the post of the battery cell, and the integrated structure formed by the post of the battery cell and the post adapter in coordination with each other may serve as each of the two polarity terminals of the battery cell.

A top cover assembly, a battery cell having the top cover assembly, and a battery module in Embodiments 10 to 17 are specifically described below in conjunction with the accompanying drawings.

### Embodiment 10

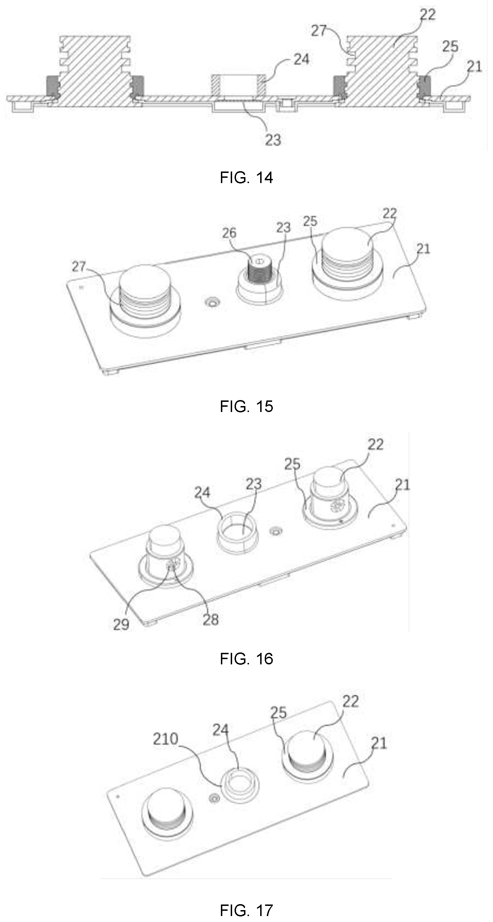

This embodiment provides a top cover assembly. FIG. 13 and FIG. 14 are schematic structural diagrams of a top cover assembly in this embodiment, which includes a top cover plate 21. Two polarity terminals 22 are disposed on the top cover plate 21, serving as positive and negative polarity terminals 22 of a battery cell 225, respectively. An explosion venting portion 23 is provided on the top cover plate 21 between the positive and negative polarity terminals 22. An explosion venting branch pipe 24 is fixed to a region of the top cover plate 21 around the explosion venting portion 23. In this embodiment, the explosion venting branch pipe 24 is a straight pipe section and is integrally formed with the top cover plate 21 using a stamping process. The explosion venting branch pipe may be made of aluminum, the same as the top cover plate 21.

It should be noted that insulation is maintained between the positive and negative polarity terminals 22 and the top cover plate 21. The method of maintaining insulation may be pouring an insulating glue or providing an insulating rubber sleeve 25, etc.

Since the explosion venting branch pipe 24 and the top cover plate 21 are an integral part in this embodiment, after the battery cell 225 is formed, both the explosion venting branch pipe 24 and the top cover plate 21 are electrified. To improve safety performance, as shown in FIG. 15, this embodiment may use a hollow connecting pipe 26 made of an insulating material to connect the explosion venting branch pipe 24 and the first explosion venting manifold 224. One end of the hollow connecting pipe 26 may be sleeved inside the explosion venting branch pipe 24, while another end thereof extends out of the explosion venting branch pipe 24 for connection with the first explosion venting manifold 224. In an embodiment, one end of the hollow connecting pipe 26 may be sleeved outside the explosion venting branch pipe 24, while another end thereof extends out of the explosion venting branch pipe 24 for connection with the first explosion venting manifold 224. The hollow connecting pipe 26 may be made of a plastic material resistant to high temperatures (thermal runaway temperatures), such as PP or PE material. That is, a PP or PE pipe may be used as the hollow connecting pipe 26.

In some other embodiments, insulation between the explosion venting branch pipe 24 and the first explosion venting manifold 224 may be achieved by applying an insulating coating on the inner and outer surfaces of the explosion venting branch pipe 24. However, compared to this embodiment, the process is more complex and the cost is higher.

As can be seen from FIG. 13 to FIG. 15, each of the two polarity terminals 22 in this embodiment is a cylinder. Two annular grooves 27 are formed in a side wall of each of the two polarity terminals 22. The two annular grooves 27 are arranged along a height direction of each of the two polarity terminals 22. Each of the two annular grooves 27 extends along a circumferential direction of the side wall of each of the two polarity terminals 22. Based on the two annular grooves 27, the heat exchange area of this portion of each of the two polarity terminals 22 may be increased. After this portion is placed in the inner cavity of a heat exchange device 223, compared with a polarity terminal 22 having a smooth side wall, a larger heat exchange area is provided, thereby achieving a better heat exchange effect.

In some other embodiments, the number of annular grooves 27 and dimensions such as groove width and groove depth may be adjusted according to requirements, specifically on the premise that the electrical conductivity of the two polarity terminals 22 is not affected.

In some other embodiments, other functional structures may be fabricated on the two polarity terminals 22 to increase the heat exchange area of the two polarity terminals 22. Such functional structures may include, but are not limited to, point-like pits, protrusions, etc., located on the side wall of each of the two polarity terminals 22. Compared with the above functional structures, the structure of the annular groove 27 in this embodiment is easy to fabricate and has lower fabrication cost.

In addition, this embodiment does not limit a cross-sectional shape of each of the two polarity terminals 22. In an embodiment, different from this embodiment, in some other embodiments, a columnar body with a rectangular cross section may alternatively be used as each of the two polarity terminals 22.

### Embodiment 11

This embodiment also provides a top cover assembly. Different from Embodiment 10, as shown in FIG. 16, a through hole 28 penetrating through each of the two polarity terminals 22 is formed in this embodiment. The through hole serves as a functional structure to increase the heat exchange area between each of the two polarity terminals 22 and a heat exchange medium.

As can be seen from FIG. 16, taking one through hole 28 as an example in this embodiment, the cross-sectional area of the through hole 28 may be increased as much as possible without affecting the electrical conductivity of each of the two polarity terminals 22, thereby increasing the heat exchange area and improving the heat exchange effect. In some other embodiments, two or more through holes 28 may alternatively be provided, specifically on the premise that the electrical conductivity of each of the two polarity terminals 22 is not affected.

In this embodiment, a central axis of the through hole 28 is parallel to a plane where the top cover plate 21 lies. In some other embodiments, an extension line of the central axis of the through hole 28 may have a certain included angle with the top cover plate 21, where the included angle is not equal to 90°.

To further optimize the heat exchange effect, four heat dissipation fins 29 may further be disposed within the through hole 28 in this embodiment. The four heat dissipation fins 29 are uniformly distributed along a circumferential direction of the through hole 28. Each of the four heat dissipation fins 29 extends along an axial direction of the through hole 28. Based on the four heat dissipation fins 29, the contact area between the heat exchange medium and each of the two polarity terminals 22 may be increased, i.e., the heat exchange area is increased, thereby effectively improving the heat exchange effect.

In some other embodiments, according to a channel size, the number of heat dissipation fins 29 and their arrangement may be adjusted without affecting the circulation of the heat exchange medium.

### Embodiment 12

This embodiment also provides a top cover assembly. Different from the above embodiments, the explosion venting branch pipe 24 and the top cover plate 21 are separate parts in this embodiment. Generally, the explosion venting branch pipe 24 may be fixed to the top cover plate 21 by welding, riveting, or injection molding.

If welding is used, typically, the material of the explosion venting branch pipe 24 is the same as that of the top cover plate 21. After the welding is completed, the insulation between the explosion venting branch pipe 24 and the top cover plate 21 as well as the first explosion venting manifold 224 still needs to be considered. The method in Embodiment 10 may be adopted to insulate the explosion venting branch pipe 24 from the first explosion venting manifold 224. To improve welding convenience and firmness, as shown in FIG. 17, a second annular plate 210 concentric with the explosion venting branch pipe 24 may be provided on an outer side of an end of the explosion venting branch pipe 24 connected to the top cover plate 21. The explosion venting branch pipe 24 is welded to the top cover plate 21 via the second annular plate 210, where the second annular plate 210 and the explosion venting branch pipe 24 may be an integral part or separate parts.

Riveting is less convenient for assembly compared to welding. Moreover, after assembly is completed, the insulation between the explosion venting branch pipe 24 and the top cover plate 21 as well as the first explosion venting manifold 224 still needs to be considered.

When injection molding is used, the material of the explosion venting branch pipe 24 may be directly selected as an insulating material resistant to high temperatures (the high temperatures here refer to thermal runaway temperatures), such as a PP or PE material. The explosion venting branch pipe 24 is directly insulated from the top cover plate 21, eliminating the need for additional insulating members. The structure is simple, fabrication is convenient, and the cost is low. Therefore, in this embodiment, the explosion venting branch pipe 24 is fixed to the top cover plate 21 using injection molding.

In some other embodiments, the explosion venting branch pipe 24 made of materials such as PP or PE may alternatively be fixed to the top cover plate 21 by heat fusion. However, compared to this embodiment, the fabrication process is more cumbersome. However, compared to methods such as welding or riveting, no additional insulating members are required, and the structure is relatively simple.

### Embodiment 13

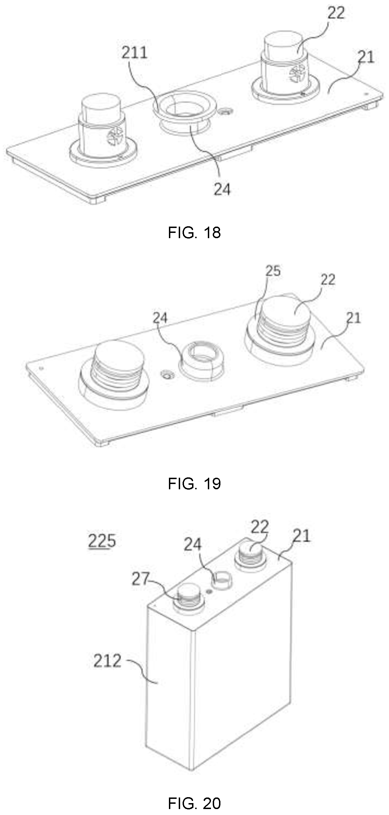

To facilitate the connection between the explosion venting branch pipe 24 and the first explosion venting manifold 224, the structure of the explosion venting branch pipe 24 in the above embodiments is optimized in this embodiment. In FIG. 18, optimization based on the top cover assembly of Embodiment 11 is taken as an example. In FIG. 19, optimization based on the top cover assembly of Embodiment 10 is taken as an example.

As shown in FIG. 18, in this embodiment, the end of the explosion venting branch pipe 24 connected to the first explosion venting manifold 224 is outwardly folded, and a chamfer is formed at the folded portion. It can also be understood that a concentric first annular plate 211 is disposed on the outer side of the end of the explosion venting branch pipe 24 connected to the first explosion venting manifold 224, and a chamfer is provided between the first annular plate 211 and the explosion venting branch pipe 24. Of course, when the explosion venting branch pipe 24 has a relatively thick wall, a chamfer may be directly machined at its end. When the first explosion venting manifold 224 has branch pipes, adding a chamfer to the end of the explosion venting branch pipe 24 connected thereto may facilitate the insertion of each branch pipe into the explosion venting branch pipe 24, achieving the connection between the explosion venting branch pipe 24 and the first explosion venting manifold 224. To improve the sealing performance, a sealing ring or sealant, etc., may be added at the connection portion.

As shown in FIG. 19, in this embodiment, the explosion venting branch pipe 24 may alternatively be designed as a variable-diameter pipe section, where one section is a straight pipe section, and another section is a tapered pipe section. A large end of the tapered pipe section is connected to the straight pipe section, and a small end of the tapered pipe section is configured for connection with the first explosion venting manifold 224. When the first explosion venting manifold 224 has branch pipes, the tapered pipe section is inserted into the corresponding branch pipe to achieve connection between the explosion venting branch pipe 24 and the first explosion venting manifold 224. When the first explosion venting manifold 224 has no branch pipe, the tapered pipe section may alternatively be inserted into a corresponding second through hole 251 in the first explosion venting manifold 224 to achieve connection between the explosion venting branch pipe 24 and the first explosion venting manifold 224.

In this embodiment, the explosion venting branch pipe 24 and the top cover plate 21 may be an integral part. After the battery cell 225 is formed, both the explosion venting branch pipe 24 and the top cover plate 21 are electrified. To improve safety performance, an insulating first explosion venting manifold 224 may be adopted and be connected to the explosion venting branch pipe 24.

In this embodiment, the explosion venting branch pipe 24 and the top cover plate 21 may alternatively be separate parts, and may be fabricated using the method in Embodiment 12.

### Embodiment 14

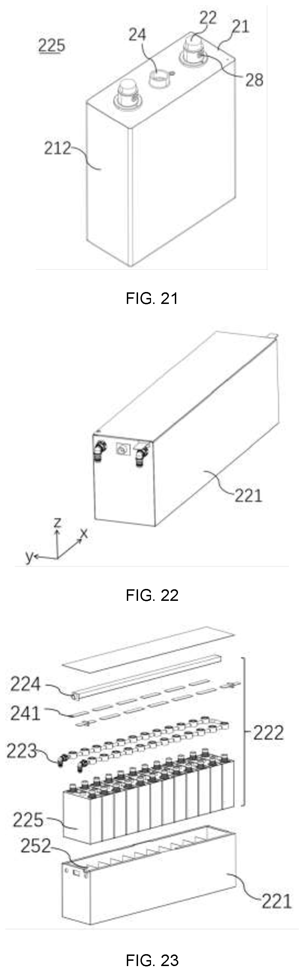

This embodiment provides a battery cell 225. FIG. 20 and FIG. 21 are schematic structural diagrams of a battery cell 225 in this embodiment, which includes a tubular body 212, a top cover assembly, a bottom cover assembly, and an electrode assembly, where the top cover assembly is the top cover assembly in the above embodiments. The top cover assembly in Embodiment 10 is taken as an example in FIG. 20, and the top cover assembly in Embodiment 11 is taken as an example in FIG. 21.

### Embodiment 15

This embodiment provides a battery module, which has a structure as shown in FIG. 22, FIG. 23, and FIG. 24, and includes a housing 221 and one battery unit 222 located within the housing 221. In some other embodiments, the number of battery units 222 may be adjusted according to actual requirements.

A rectangular housing 221 is used. For convenience of description, the length direction of the housing 221 is defined as the x-direction, the width direction of the housing 221 is defined as the y-direction, and the height direction of the housing 221 is defined as the z-direction.

Each battery unit 222 includes a heat exchange device 223, a first explosion venting manifold 224, and 12 battery cells 225 of Embodiment 14. The 12 battery cells 225 are arranged along the x-direction. In other embodiments, the number of battery cells 225 may be adjusted according to actual requirements.

In FIG. 22 to FIG. 24, the battery cell 225 in Embodiment 10 is taken as an example.

The structure of the housing 221 is not particularly limited in this embodiment, and at least the following two configurations may be adopted:
A first configuration includes a tubular body having two open ends (i.e., the ports parallel to the yz plane are open ends), and end plates fixed to the two open ends of the tubular body, respectively (i.e., the end plates are parallel to the yz plane).

A second configuration includes a tubular body having open ends at a top and a bottom (i.e., the ports parallel to the xy plane are open ends), and a top plate and a bottom plate that are respectively fixed to the open ends at the top and bottom of the tubular body (i.e., both the top plate and the bottom plate are parallel to the xy plane, where the top plate or the bottom plate may be of an integrated structure with the tubular body).

The housing 221 in this embodiment mainly has the following functions in two aspects.

In a first aspect, it is to improve the safety performance of the entire battery module.
1. When the battery cell 225 located in an inner cavity of the housing 221 bursts due to thermal runaway, splashes are blocked by the housing 221 and will not pose a threat to the safety of people around the battery module.
2. The housing 221 also provides a certain protective effect on each of the battery cells 225, which may avoid problems such as damage caused by direct exposure of each of the battery cells 225.

In a second aspect, it facilitates storage and transportation of the entire battery module.

A plurality of battery cells 225 are placed within a relatively regular-structured housing 221, thereby facilitating storage and transportation of the battery module.

To improve the protective performance of the housing 221, the housing 221 in this embodiment is made of a metal material, typically aluminum or iron material. Based on cost considerations, iron material is used.

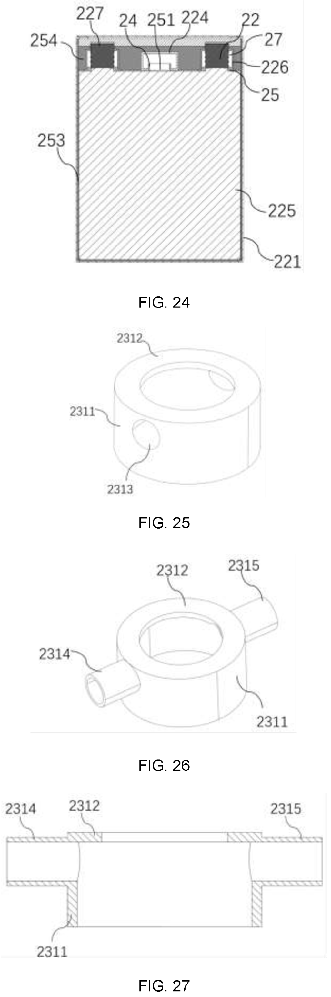

As can be seen in conjunction with FIG. 23 and FIG. 24, the heat exchange device 223 in this embodiment includes 24 heat exchange sleeves 226. The 24 heat exchange sleeves 226 are respectively sleeved outside 24 polarity terminals 22.

The structure of the heat exchange sleeve 226 is as shown in FIG. 25, including a hollow member 2311 and an annular sealing plate 2312. Two first through holes 2313 penetrating an inner cavity of the hollow member 2311 are formed in a side wall of the hollow member, serving as a liquid inlet and a liquid outlet, respectively. The annular sealing plate 2312 is coaxial with the hollow member 2311 and is sealed and fixed to a top end of the hollow member 2311.

As can be seen in conjunction with FIG. 24, the heat exchange sleeve 226 is sleeved outside the polarity terminal 22, forming an annular cavity with the side wall of the polarity terminal 22. This annular cavity serves as a heat exchange medium flow cavity. A portion of the polarity terminal 22 where the annular groove 27 is provided is located within the heat exchange medium flow cavity. A bottom end of the hollow member 2311 is sealed and fixed to an insulating rubber sleeve 25 sleeved over the polarity terminal 22 of the battery cell 225. An inner annular surface of the annular sealing plate 2312 is sealed and fixed to the side wall of the polarity terminal 22, while a portion of the structure of the polarity terminal 22 extends out of an inner hole of the annular sealing plate 2312, serving as an electrical connection portion 227 of the polarity terminal 22.

Embodiments 10 to 17 do not specifically limit the cross-sectional shape of the hollow member 2311. Typically, the cross-sectional shape of the hollow member 2311 is adapted to that of the polarity terminal 22. In an embodiment, when the cross section of the polarity terminal 22 is circular, the cross section of the corresponding hollow member 2311 is in the shape of a circular ring. When the cross section of the polarity terminal 22 is square, the cross section of the corresponding hollow member 2311 is in the shape of a square ring.

In this embodiment, the hollow member 2311 and the annular sealing plate 2312 are an integral part. In some other embodiments, the hollow member 2311 and the annular sealing plate 2312 may be separate parts, but are relatively more complex to fabricate compared to this embodiment.

In this embodiment, the heat exchange sleeve 226 is made of a rubber material. The heat exchange sleeve 226 made of the rubber material has a certain elastic deformation. The bottom end of the hollow member 2311 is in tight fit with the insulating rubber sleeve 25, achieving sealing and fixation between them. To improve sealing reliability, an insulating sealant may alternatively be used for bonding. The inner annular surface of the annular sealing plate 2312 and the side wall of the polarity terminal 22 may be sealed via tight fit. In some other embodiments, an annular sealing ring may be added between the inner annular surface of the annular sealing plate 2312 and the side wall of the polarity terminal 22 to further improve sealing between them.

In some other embodiments, when the heat exchange sleeve 226 is made of a metal material, an insulating sealant may alternatively be used for bonding between an inner side wall of the bottom end of the hollow member 2311 and the insulating rubber sleeve 25 to achieve sealing and fixation between them. The inner annular surface of the annular sealing plate 2312 and the side wall of the polarity terminal 22 may be sealed by welding.

In some other embodiments, when the heat exchange sleeve 226 is made of a metal material, the bottom end of the hollow member 2311 may alternatively be sealed and fixed to the top cover plate 21 of the battery cell 225 by welding, ensuring sealing between the hollow member 2311 and the side wall of the polarity terminal 22. The inner annular surface of the annular sealing plate 2312 and the side wall of the polarity terminal 22 are sealed by using an insulating sealant.

As shown in FIG. 23, in this embodiment, the heat exchange sleeves 226 of the battery cells 225 on the same side are connected to form two heat exchange channels at the tops of 12 battery cells 225. The two heat exchange channels may be connected in parallel or in series, and heat exchange is achieved based on the two heat exchange channels.

In some other embodiments, as shown in FIG. 26 and FIG. 27, the heat exchange sleeve 226 further includes a liquid inlet pipe 2314 and a liquid outlet pipe 2315. Both the liquid inlet pipe 2314 and the liquid outlet pipe 2315 are fixed to the side wall of the hollow member 2311 and respectively communicate with the liquid inlet and the liquid outlet.

The hollow member 2311, the annular sealing plate 2312, the liquid inlet pipe 2314, and the liquid outlet pipe 2315 are an integral part and are all made of an insulating material, an insulating material having a certain elastic deformation.

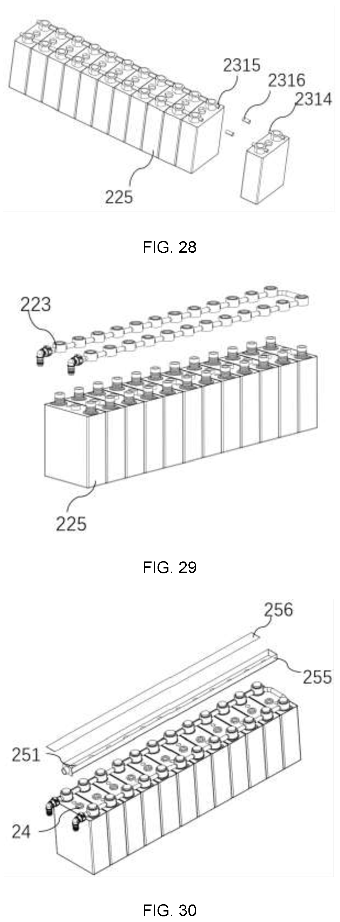

It should be noted that, among adjacent heat exchange sleeves 226, the liquid inlet pipe 2314 of one heat exchange sleeve 226 and the liquid outlet pipe 2315 of another heat exchange sleeve 226 may be inserted into each other, achieving communication between the two adjacent heat exchange sleeves 226. A connecting pipe section 2316 (e.g., a heat shrink pipe, see FIG. 28) may alternatively be used to connect the liquid inlet pipe 2314 of one heat exchange sleeve 226 and the liquid outlet pipe 2315 of another heat exchange sleeve 226, achieving communication between the two adjacent heat exchange sleeves 226.

In this embodiment, the following two mounting methods may be adopted to achieve fixation of the heat exchange device 223 to each of the battery cells 225.

### Mounting method I:

As shown in FIG. 28, the heat exchange sleeves 226 are sleeved over the corresponding polarity terminals 22 one by one. During the sleeving process, adjacent heat exchange sleeves 226 are connected, and sealing between the top and bottom open ends of the heat exchange sleeve 226 and the side wall of the polarity terminal 22 is completed. Finally, two heat exchange channels are formed.

### Mounting method II:

As shown in FIG. 29, firstly, the heat exchange sleeves 226 are connected to form two heat exchange channels. Then, each heat exchange channel is mounted as a whole onto the tops of 12 battery cells 225. During the mounting process, the heat exchange sleeves 226 of each heat exchange channel are sleeved over the corresponding polarity terminals 22, and sealing between the top and bottom open ends of the heat exchange sleeve 226 and the side wall of the polarity terminal 22 is completed. Finally, two heat exchange channels are formed.

As can be seen from FIG. 23, the battery unit 222 further includes an electrical connecting member 241. The electrical connecting member 241 is connected to the electrical connection portion 227 of each polarity terminal 22, achieving electrical connection of each of the battery cells 225. In this embodiment, the battery cells 225 are connected to each other in series. The electrical connecting member 241 includes 13 electrical connecting sub-members. Two ends of each of the 13 electrical connecting sub-members are respectively connected to the electrical connection portions 227 of polarity terminals 22 of different polarities of adjacent battery cells 225. Free ends of the two outermost electrical connecting sub-members extend out of the housing 221, serving as two electrical connection terminals of different polarities of the battery module.

In some other embodiments, the battery cells 225 may alternatively be electrically connected in parallel or in series and in parallel.

As can be seen from FIG. 24, in this embodiment, 12 second through holes 251 arranged along the x-direction are formed in a pipe wall of the first explosion venting manifold 224. Each second through hole 251 corresponds to the explosion venting branch pipe 24 on the top cover plate 21 of a battery cell 225. The explosion venting branch pipe 24 of each of the battery cells 225 is hermetically inserted into the corresponding second through hole 251. As can be seen in conjunction with FIG. 22 and FIG. 23, one end of the first explosion venting manifold 224 in this embodiment is closed, while another end thereof extends out of the housing 221, serving as a thermal runaway gas discharge port. In some other embodiments, both ends of the first explosion venting manifold 224 may extend out of the housing 221, serving as thermal runaway gas discharge ports.

The first explosion venting manifold 224 may be fixed to the top cover plate 21 of each of the battery cells 225 by bonding. Meanwhile, before mounting the first explosion venting manifold 224, positioning marks may be preset on the top cover plate 21 and the first explosion venting manifold 224 according to designed dimensions, so that each explosion venting branch pipe 24 may be accurately inserted into the corresponding second through hole 251.

In some other embodiments, 12 branch pipes are connected to the first explosion venting manifold 224. The 12 branch pipes are respectively in communication with 12 second through holes 251. Each branch pipe is inserted into the corresponding explosion venting branch pipe 24. When the explosion venting branch pipe 24 shown in FIG. 18 and FIG. 19 is used, insertion between the two is more convenient. Specific insertion methods have been described in Embodiment 13 and will not be repeated here.

As shown in FIG. 23, in this embodiment, a separator plate 252 may further be disposed between two adjacent battery cells 225. The separator plate 252 is made of an insulating material. For each of the battery cells 225 near a middle portion, side walls on both sides (large surfaces of the battery cell 225) thereof are in contact with the separator plate 252. For the two battery cells 225 near outermost sides, one side wall thereof is in contact with the separator plate 252, while another side wall thereof is in contact with the side wall of the housing 221.

In this embodiment, the separator plate 252 has at least the following advantages.

In a first aspect, insulation between two battery cells 225 may be achieved, thereby improving the safety performance of the battery module.

In a second aspect, the mounting stability of each of the battery cells 225 within the housing is improved.

In a third aspect, the separator plate 252 has a certain elasticity. When the battery cell 225 undergoes expansion deformation, the separator plate 252 is squeezed by the battery cell 225 to produce elastic deformation. After the separator plate 252 undergoes elastic deformation, it may provide expansion space for expansion of the battery cell 225, such that the expansion deformation of the battery cell 225 does not squeeze the housing 221, avoiding deformation and leakage problems of the housing 221 caused by squeezing. Thus, the performance and safety of the battery module are improved.

In a fourth aspect, heat generated during charging and discharging of each of the battery cells 225 may be transferred to the outside through the separator plate 252, thereby reducing the risk of thermal runaway.

As shown in FIG. 24, in this embodiment, an insulating plate 253 is disposed between the battery unit 222 and the housing 221 and is configured to achieve insulation between the housing 221 and the battery unit 222. In this embodiment, 5 insulating plates 253 are included, which are respectively disposed between four side walls of the battery unit 222 and four side walls of the housing 221, and between the bottom of the battery unit 222 and a bottom plate of the housing 221. In some other embodiments, an insulating plate 253 may alternatively be disposed between the top of the battery unit 222 and the housing 221.

As shown in FIG. 24, in this embodiment, an insulating sealant layer 254 may alternatively be laid between each of the battery cells 225 and the housing 221. The insulating sealant layer 254 is mainly laid in a space between the top of each of the battery cells 225 and the housing 221. A portion of the heat exchange device 223 inside the housing 221 is located within the insulating sealant layer 254. Meanwhile, the electrical connecting member 241 inside the housing 221 may alternatively be located within the insulating sealant layer 254 (when signals need to be collected from the electrical connecting member 241, the electrical connecting member 241 needs to be exposed from the insulating sealant layer 254). A portion of the first explosion venting manifold 224 inside the housing 221 is also located within the insulating sealant layer 254. When there is a gap between each of the battery cells 225, an insulating sealant liquid may alternatively permeate into the gap to form the insulating sealant layer 254. When there are gaps between the four side walls and the bottom of each of the battery cells 225 and the housing 221, the insulating sealant liquid may alternatively permeate into the gaps to form the insulating sealant layer 254.

In this embodiment, the insulating sealant layer 254 has at least the following advantages.

Firstly, the sealing performance of each portion of the heat exchange device 223 is further improved.

Specifically, the insulating sealant liquid constituting the insulating sealant layer 254 permeates into the gap between the heat exchange sleeve 226 and the side wall of the polarity terminal 22, further sealing the gap radially (the insulating sealant liquid may not flow into the heat exchange medium flow cavity through the gap between the heat exchange sleeve 226 and the side wall of the polarity terminal 22).

Secondly, condensation is prevented.

During long-term use, due to a temperature difference between inside and outside of the heat exchange device 223, condensation may occur on the surface. When condensation accumulates to a certain amount, it may cause a short circuit problem. By laying the insulating sealant layer 254 to entirely wrap the heat exchange device 223, when condensation occurs on the surface of the heat exchange device 223, under protection of the insulating sealant layer 254, a battery short circuit may be prevented.

Thirdly, insulation between the heat exchange device 223 and the top cover plate 21 of the battery cell 225 is achieved.

When the heat exchange device 223 made of a non-insulating material is used, when the insulating sealant layer 254 completely wraps the heat exchange device 223, insulation of such a heat exchange device 223 may be achieved, thereby further improving the performance of insulation between the heat exchange device 223 and the top cover plate 21 of the battery cell 225.

Fourthly, the performance of insulation between each of the battery cells 225 and the housing 221 is further improved.

The insulating sealant liquid permeates into the gaps between the battery unit 222 and the insulating plate 253, and between the insulating plate 253 and the housing 221, so that the performance of insulation between each of the battery cells 225 and the housing 221 may be further improved.

Fifthly, the performance of insulation between the battery cells 225 is further improved.

The insulating sealant liquid permeates into the gap between the battery cells 225, so that the performance of insulation between the battery cells 225 may be further improved.

Sixthly, the bonding strength and the performance of sealing the first explosion venting manifold 224 and the top cover plate 21 of each of the battery cells 225 are improved.

The insulating sealant layer 254 covers the first explosion venting manifold 224, so that the first explosion venting manifold 224 may be further pressed onto the top cover plate 21 of each of the battery cells 225. Meanwhile, the insulating sealant liquid may permeate into the gap between the first explosion venting manifold 224 and the top cover plate 21, further sealing the gap (the insulating sealant liquid may not flow into the inner cavity of the first explosion venting manifold 224 through the gap).

### Embodiment 16

Different from the above Embodiment 15, this embodiment adopts a split-type first explosion venting manifold 224. Based on such a first explosion venting manifold 224, connection between the first explosion venting manifold 224 and each explosion venting branch pipe 24 may be achieved in different ways.

As shown in FIG. 30, the first explosion venting manifold 224 in this embodiment is a separate part, including a half pipe 255 with a U-shaped cross section and a top cover plate 256 configured to seal a top open end of the half pipe 255. Thirteen second through holes 251 are formed in a bottom plate of the half pipe 255.

Based on the split-type design, in this embodiment, the first explosion venting manifold 224 and the explosion venting branch pipe 24 may be hermetically connected by welding, which may be specifically achieved through the following process:
The half pipe 255 is positioned on the top cover plate 21 of each of the battery cells 225, such that each explosion venting branch pipe 24 is in one-to-one correspondence with each second through hole 251, and it is ensured that each explosion venting branch pipe 24 is inserted into the second through hole 251.

A welding head is inserted from the top open end of the half pipe 255 into an edge portion of the second through hole 251, and the edge of each second through hole 251 is welded to the outer wall of the corresponding venting branch pipe 24 to achieve sealing.

The top cover plate 256 is hermetically welded to the top open end of the half pipe 255.

In this embodiment, during welding, the welding head is inserted from the open end without any obstruction, allowing welding of the edge of the second through hole 251 to the explosion venting branch pipe 24 of each of the battery cells 225 to be completed at once. The process is simple, and the sealing effect is good.

### Embodiment 17

Different from Embodiment 15 and Embodiment 16, this embodiment adopts a heat exchange device 223 with a different structure.

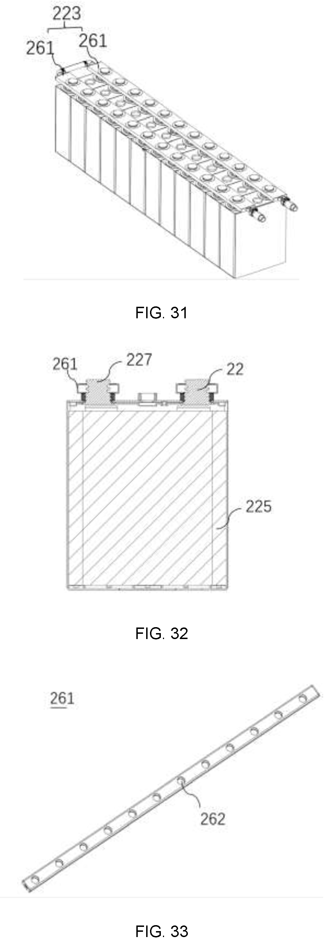

As shown in FIG. 31 and FIG. 32 (FIG. 31 and FIG. 32 are partial structural views of a battery unit 222 in this embodiment, where the first explosion venting manifold 224 and the electrical connecting member 241 are not shown in the figures), this embodiment adopts two heat exchange pipe members 261 as the heat exchange device 223. The two heat exchange pipe members 261 are respectively sleeved over battery cells 225 22 on different sides of the battery unit 222 (where the heat exchange pipe member 261 may or may not contact the top cover plate 21 of the battery cell 225).

When the heat exchange pipe member 261 contacts both the polarity terminal 22 and the top cover plate 21 of the battery cell 225 simultaneously, if the polarity terminal 22 is electrically connected to the top cover plate 21 via the heat exchange pipe member 261, a short circuit will occur. Therefore, it is necessary to insulate the heat exchange pipe member 261 from the top cover plate 21 of the battery cell 225, or to insulate the heat exchange pipe member 261 from the polarity terminal 22. Of course, the heat exchange pipe member 261 may alternatively be insulated from both the top cover plate 21 of the battery cell 225 and the polarity terminal 22. That is, it is only necessary to ensure that the polarity terminal 22 may not be electrically connected to the top cover plate 21 of the battery cell 225 via the heat exchange pipe member 261.

Typically, the aforementioned problem may be solved by the following methods.
2.1. The heat exchange pipe member 261 made of an insulating material is used, so that insulation between the heat exchange pipe member 261 and both the top cover plate 21 of the battery cell 225 and the polarity terminal 22 may be achieved.
2.2. When the heat exchange pipe member 261 made of a non-insulating material is used, the problem may be overcome by adding an insulating pad, an insulating film, or an insulating paint between the top cover plate 21 of the battery cell 225 and the heat exchange pipe member 261. The problem may alternatively be overcome by adding an insulating pad, an insulating film, or an insulating paint on an inner bottom surface of the heat exchange pipe member 261 (a surface inside the heat exchange pipe member 261 close to the top cover plate 21 of the battery cell 225). The problem may alternatively be overcome by performing an insulating treatment on the pipe wall of the heat exchange pipe member 261, for example, spraying an insulating paint or wrapping an insulating film. The problem may alternatively be overcome by adding an insulating sealing washer between the polarity terminal 22 and the heat exchange pipe member 261. Of course, for safety, the above methods may be combined, and multiple insulation methods may be adopted to overcome the problem.

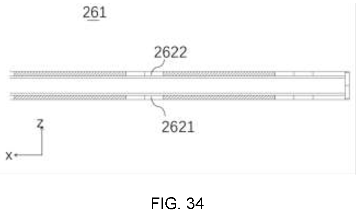

The structure of the heat exchange pipe member 261 is shown in FIG. 33 and FIG. 34. As can be seen from the figures, the heat exchange pipe member 261 in this embodiment is provided with 12 penetrating holes 262. The 12 penetrating holes 262 are arranged along the x-direction and are in one-to-one correspondence with the polarity terminals 22 of the battery cells 225. In some other embodiments, the number of penetrating holes 262 may be adjusted according to the number of battery cells 225 in the battery unit 222, and the arrangement of the penetrating holes 262 may be adjusted according to the arrangement of the battery cells 225.

In this embodiment, the cross-sectional shape of a pipe body is not specifically limited. Since the heat exchange pipe member 261 in this embodiment is placed on the planar top cover plate 21 of the battery cell 225, considering structural regularity, as can be seen from the figures, the pipe body in this embodiment is a rectangular pipe. In some other embodiments, a round pipe or pipes in other structural forms may also be used.

The aforementioned penetrating hole 262 is a penetrating hole 262 that penetrates through the top cover plate 256 and the bottom plate of the heat exchange pipe member 261 and communicates with an inner cavity of the heat exchange pipe member 261. In this embodiment, after the heat exchange pipe member 261 is fixed to the top of the battery cell 225, the extension direction of the penetrating hole 262 is consistent with the height direction of the housing 221 (the height direction of the housing 221 is the z-direction). Therefore, the penetrating hole 262 may be considered as extending along the z-direction.

In addition, when the heat exchange pipe member 261 is fixed to the top of the battery cell 225, the electrical connection portion 227 of the polarity terminal 22 of each of the battery cells 225 passes through a bottom port 2621 of the corresponding penetrating hole 262 and extends out of a top port 2622, where the top port 2622 here is the port close to the electrical connection portion 227 of the polarity terminal 22.

In this embodiment, the shape of the two ports of the penetrating hole 262 is adapted to the cross-sectional shape of the polarity terminal 22. The shape of the two ports of the penetrating hole 262 is circular, and the cross section of the polarity terminal 22 is also circular, with a diameter of the two ports of the penetrating hole 262 being slightly greater than the outer diameter of the polarity terminal 22. In some other embodiments, the shape of the two ports of the penetrating hole 262 and the cross-sectional shape of the polarity terminal 22 may be different, as long as it is ensured that the polarity terminal 22 may be inserted into the penetrating hole 262.

As can be seen from FIG. 31, the battery unit 222 in this embodiment includes two heat exchange pipe members 261. Based on the penetrating holes 262, the two heat exchange pipe members 261 are respectively sleeved over the polarity terminals 22 on different sides of the battery unit 222, and are connected in series through a connecting pipe. In some other embodiments, the two heat exchange pipe members 261 may alternatively be connected in parallel.

## Claims

1. A top cover assembly, comprising a top cover plate, an explosion venting port provided on the top cover plate, and two polarity terminals disposed on the top cover plate, and further comprising an explosion venting branch pipe;
wherein one end of the explosion venting branch pipe is connected to a region of the top cover plate around the explosion venting port.

2. The top cover assembly as claimed in claim 1, wherein another end of the explosion venting branch pipe is configured for connection with a first explosion venting manifold; an explosion venting membrane is disposed on at least one of the explosion venting port and the explosion venting branch pipe; and
the explosion venting branch pipe is insulated from the top cover plate, or insulated from the first explosion venting manifold.

3. The top cover assembly as claimed in claim 2, wherein the explosion venting branch pipe and the top cover plate are an integral part; and the explosion venting branch pipe is insulated from the first explosion venting manifold.

4. The top cover assembly as claimed in claim 3, further comprising a hollow connecting member, wherein the hollow connecting member is made of an insulating material, and has one end fixedly sleeved and sealed with the explosion venting branch pipe and another end configured for connection with the first explosion venting manifold.

5. The top cover assembly as claimed in claim 2, wherein the explosion venting branch pipe and the top cover plate are separate parts; and the explosion venting branch pipe is insulated from the top cover plate.

6. The top cover assembly as claimed in claim 5, wherein the explosion venting branch pipe is an injection-molded part and is formed on the top cover plate by injection molding.

7. The top cover assembly as claimed in claim 2, wherein the another end of the explosion venting branch pipe has a chamfer.

8. The top cover assembly as claimed in claim 2, wherein the explosion venting branch pipe comprises a first hollow member and a second hollow member, wherein the first hollow member is a straight pipe section, while the second hollow member is a tapered pipe section; a large end of the tapered pipe section is connected to the straight pipe section, and a section near a small end of the tapered pipe section is configured for connection with the first explosion venting manifold.

9. The top cover assembly as claimed in claim 2, wherein a screw thread is provided on a side wall of the explosion venting branch pipe.

10. The top cover assembly as claimed in claim 2, wherein the explosion venting membrane is disposed at a port of the another end of the explosion venting branch pipe.

11. The top cover assembly as claimed in claim 2, wherein each of the two polarity terminals is a post that is a columnar body comprising a first end face, a second end face, and a side wall; the first end face is configured for electrical connection with an electrode assembly; and a through groove configured to mount a heat exchange pipe is formed in the second end face, or a through groove or a through hole configured to mount a heat exchange pipe is formed in the side wall.

12. The top cover assembly as claimed in claim 11, wherein an opening size of the through groove is smaller than a maximum width of the through groove.

13. The top cover assembly as claimed in claim 1, wherein each of the two polarity terminals is provided with a functional structure that is configured to increase a heat exchange area of each of the two polarity terminals; and a portion of each of the two polarity terminals where the functional structure is provided is configured to be placed in an inner cavity of a heat exchange device for a battery module and to directly contact a heat exchange medium.

14. The top cover assembly as claimed in claim 13, wherein the explosion venting branch pipe and the top cover plate are an integral part; and the explosion venting branch pipe is insulated from a first explosion venting manifold.

15. The top cover assembly as claimed in claim 14, wherein the top cover assembly further comprises a hollow connecting pipe, the hollow connecting pipe is made of an insulating material, and one end of the hollow connecting pipe is fixedly sleeved and sealed with the explosion venting branch pipe, and another end of the hollow connecting pipe is configured for connection with the first explosion venting manifold.

16. The top cover assembly as claimed in claim 13, wherein the explosion venting branch pipe and the top cover plate are separate parts; and the explosion venting branch pipe is insulated from the top cover plate.

17. The top cover assembly as claimed in claim 16, wherein the explosion venting branch pipe is an injection-molded part and is formed on the top cover plate by injection molding.

18. The top cover assembly as claimed in claim 13, wherein the another end of the explosion venting branch pipe has a chamfer.

19. The top cover assembly as claimed in claim 13, wherein the explosion venting branch pipe comprises a first hollow member and a second hollow member, wherein the first hollow member is a straight pipe section, while the second hollow member is a tapered pipe section; a large end of the tapered pipe section is connected to the straight pipe section, and a section near a small end of the tapered pipe section is configured for connection with the first explosion venting manifold.

20. The top cover assembly as claimed in any one of claims 13 to 19, wherein the functional structure comprises n annular grooves, n being an integer greater than or equal to 1; each of the n annular grooves extends along a circumferential direction of a side wall of each of the two polarity terminals, and the n annular grooves are arranged along a height direction of each of the two polarity terminals.

21. The top cover assembly as claimed in claim 20, wherein the functional structure is at least one through hole formed in the side wall of each of the two polarity terminals; and an inner wall of each of the at least one through hole is provided with a plurality of heat dissipation fins that are uniformly distributed along a circumferential direction of each of the at least one through hole, with each of the plurality of heat dissipation fins extending along an axial direction of each of the at least one through hole.

22. A battery cell, comprising a tubular body, a top cover assembly, a bottom cover assembly, and an electrode assembly, wherein the tubular body, the top cover assembly, and the bottom cover assembly define a housing of the battery cell, and the electrode assembly is located within the housing, and wherein the top cover assembly is the top cover assembly as claimed in claim 1.

23. The battery cell as claimed in claim 22, wherein the top cover assembly is the top cover assembly as claimed in any one of claims 2 to 12.

24. The battery cell as claimed in claim 22, wherein the top cover assembly is the top cover assembly as claimed in any one of claims 13 to 21.

25. A battery module, comprising a first explosion venting manifold and a plurality of battery cells as claimed in claim 23;
wherein the first explosion venting manifold is located above the top cover assembly of each of the plurality of battery cells and communicates with the explosion venting branch pipe of each of the plurality of battery cells, and is configured to discharge a thermal runaway gas from each of the plurality of battery cells after breaking through the explosion venting membrane.

26. An energy storage device, comprising a pack case and a plurality of battery cells as claimed in claim 23 located within the pack case;
wherein the pack case is provided with a first explosion venting manifold that is located above the top cover assembly of each of the plurality of battery cells and communicates with the explosion venting branch pipe of each of the plurality of battery cells, so as to ensure that a thermal runaway gas from each of the plurality of battery cells is discharged through the first explosion venting manifold after breaking through the explosion venting membrane.
